# EUROPEAN PATENT SPECIFICATION

(11) **EP 2 277 755 B1**
(45) Date of publication and mention of the grant of the patent: **13.05.2020**
(21) Application number: 09746484.6
(22) Date of filing: 22.04.2009
(51) Int. Cl.: B60L 50/16, B60L 50/61, B60L 53/20, B60L 58/12, F01N 3/20, B60W 20/00, B60W 10/26, B60W 10/06, B60K 6/365, B60K 1/02, B60K 6/445, B60L 1/04

(54) **HYBRID VEHICLE AND POWER CONTROL METHOD OF HYBRID VEHICLE**
HYBRIDFAHRZEUG UND LEISTUNGSSTEUERVERFAHREN FÜR EIN HYBRIDFAHRZEUG
VÉHICULE HYBRIDE ET PROCÉDÉ DE COMMANDE DE PUISSANCE DE VÉHICULE HYBRIDE

(30) Priority: 12.05.2008 JP 2008124651
(43) Date of publication of application: 26.01.2011
(73) Proprietor: TOYOTA JIDOSHA KABUSHIKI KAISHA, Toyota-shi, Aichi-ken, 471-8571 (JP)
(72) Inventor: ICHIKAWA, Shinji, Toyota-shi Aichi 471-8571 (JP)
(74) Representative: TBK
(86) International application number: PCT/JP2009/057964
(87) International publication number: WO 2009/139277

(56) References cited:
- WO-A1-2007/108454
- JP-A- 2003 227 379
- JP-U- 6 000 823

## Description

### TECHNICAL FIELD

The present invention relates to a hybrid vehicle that travels by using motive power output from at least one of an internal combustion engine and a motor for vehicle traveling, and a method for controlling electric power of the hybrid vehicle. Particularly, the present invention relates to a hybrid vehicle in which a vehicle-mounted power storage device can be charged from a power supply external to the vehicle, and a method for controlling electric power of the hybrid vehicle.

### BACKGROUND ART

Japanese Utility Model Laying-Open No. 6-823 (Patent Document 1) discloses a vehicle interior preliminary heating control apparatus for an electric vehicle. In this vehicle interior preliminary heating control apparatus, a heating and cooling device is connected to an output line of a vehicle-mounted charger. After charging of a battery for traveling by the vehicle-mounted charger is completed and an electric outlet has room in terms of the capacity, passage of electric power through the heating and cooling device is controlled for vehicle interior preliminary heating (see Patent Document 1). Further prior art can be found in document WO 2007/ 108 454 A1 describing a vehicle having a high-voltage battery, a socket for connecting a charge cable of an external power source device in order to charge the battery, and a cooling/heating load, as an electric load of a vehicle interior, and a load for warming up an engine that receive electric power from the high-voltage battery or an accessory battery and are controlled by a control device.

### PRIOR ART DOCUMENTS

### PATENT DOCUMENTS

Patent Document 1: Japanese Utility Model Laying-Open No. 6-823
Patent Document 2: Japanese Patent Laying-Open No. 2005-295668

### SUMMARY OF THE INVENTION

### PROBLEMS TO BE SOLVED BY THE INVENTION

In recent years, a hybrid vehicle that can travel by using motive power output from at least one of an engine and a motor for traveling has been receiving attention. The hybrid vehicle has a power storage device, an inverter and a motor driven by inverter mounted thereon as a power source for traveling, in addition to the engine.

In such hybrid vehicle as well, a vehicle in which the vehicle-mounted power storage device can be charged from a power supply external to the vehicle is known. For example, a power supply outlet provided at home is connected to a charging port provided at the vehicle by using a charging cable, so that the power storage device is charged from a household power supply. Such hybrid vehicle in which the vehicle-mounted power storage device can be charged from the power supply external to the vehicle will also be referred to as "plug-in hybrid vehicle" hereinafter.

Since the plug-in hybrid vehicle also has the engine mounted thereon, a block heater for engine warm-up is required to ensure the startability of the engine in cold regions. A power supply for the block heater is required to warm up the engine by using the block heater. In the plug-in hybrid vehicle, it is necessary to connect the charging cable in order to charge the power storage device from the power supply external to the vehicle. Therefore, separately connecting a power feeding cable for the block heater to the power supply outlet impairs the user's convenience.

In addition, in the plug-in hybrid vehicle, the power storage device can be charged with electric power generated using the engine, even if the power storage device cannot be charged sufficiently from the power supply external to the vehicle. However, when the engine cannot be warmed up and started at extremely low temperature, the electric power generation using the engine becomes impossible and there is a possibility that even the plug-in hybrid vehicle cannot travel.

Thus, the present invention has been made to solve the above problems, and an object thereof is to provide a hybrid vehicle in which the user's convenience can be taken into consideration and electric power can be appropriately fed to a block heater.

In addition, another object of the present invention is to provide a method for controlling electric power of a hybrid vehicle in which the user's convenience can be taken into consideration and electric power can be appropriately fed to a block heater.

### MEANS FOR SOLVING THE PROBLEMS

According to the present invention, a hybrid vehicle is directed to a hybrid vehicle that travels by using motive power output from at least one of an internal combustion engine and a motor for vehicle traveling, including: a power storage device; an electric power receiving unit; a charging device; a heater; and a controller. The power storage device stores electric power to be supplied to the motor. The electric power receiving unit receives electric power supplied from a power supply external to the vehicle. The charging device is configured to convert a voltage of electric power input from the electric power receiving unit and charge the power storage device. The heater receives operation power from the charging device and warms up the internal combustion engine. The controller controls the charging device to give higher priority to power feeding to the heater than to charging of the power storage device, when the heater is electrically connected to the charging device.

Preferably, the controller changes charging control over the power storage device based on whether or not the heater is electrically connected to the charging device.

Preferably, the hybrid vehicle further includes a power supply port. The power supply port is provided within an engine room where the internal combustion engine is housed, for receiving electric power from the charging device. The heater is configured to be attachable/detachable from/to the power supply port.

In addition, preferably, the hybrid vehicle further includes a switch for switching between operation and non-operation of the heater. The controller controls the charging device to give higher priority to power feeding to the heater than to charging of the power storage device, when the switch is ON.

Preferably, the hybrid vehicle further includes a first temperature sensor. The first temperature sensor detects a temperature of the internal combustion engine. The controller controls charging of the power storage device and power feeding to the heater, based on a value detected by the first temperature sensor and a state of charge of the power storage device.

More preferably, the controller controls the charging device to give higher priority to power feeding to the heater than to charging of the power storage device, when the value detected by the first temperature sensor is lower than a first predefined value and the heater is electrically connected to the charging device.

More preferably, the controller controls the charging device to end power feeding to the heater when the value detected by the first temperature sensor reaches the first predefined value or higher, and controls the charging device to charge the power storage device when an amount of a state indicating the state of charge of the power storage device is lower than a second predefined value at the end of power feeding to the heater.

In addition, more preferably, the controller controls the charging device to charge the power storage device when the heater is electrically disconnected from the charging device and when an amount of a state indicating the state of charge of the power storage device is lower than a second predefined value.

Preferably, the hybrid vehicle further includes: a second temperature sensor; and an electric-powered air conditioner. The second temperature sensor detects a temperature of a vehicle interior. The electric-powered air conditioner is operated by the electric power stored in the power storage device or the electric power input from the electric power receiving unit. The electric-powered air conditioner conditions air in the vehicle interior before a user gets in the vehicle, based on a pre-air-conditioning command for requesting air conditioning of the vehicle interior before the user gets in the vehicle. The controller controls charging of the power storage device, power feeding to the heater and operation of the electric-powered air conditioner, based on further a value detected by the second temperature sensor and the pre-air-conditioning command.

More preferably, the controller controls the charging device to give higher priority to power feeding to the heater than to charging of the power storage device and the operation of the electric-powered air conditioner, when the value detected by the first temperature sensor is lower than a predefined value and the heater is electrically connected to the charging device.

Preferably, the hybrid vehicle further includes an electrically heated catalyst device. The electrically heated catalyst device receives electric power from the power storage device and purifies exhaust gas discharged from the internal combustion engine. The controller exercises electric power control to give higher priority to power feeding to the electrically heated catalyst device than to power feeding to the heater, when startup of the internal combustion engine is anticipated.

Preferably, the hybrid vehicle further includes an electric power generating device. The electric power generating device is configured to generate electric power by using the motive power output from the internal combustion engine and charge the power storage device. The controller controls the charging device to feed electric power from the power storage device to the heater, when the electric power receiving unit does not receive electric power from the power supply.

According to the present invention, a method for controlling electric power of a hybrid vehicle is directed to a method for controlling electric power of a hybrid vehicle that travels by using motive power output from at least one of an internal combustion engine and a motor for vehicle traveling. The hybrid vehicle includes: a power storage device; an electric power receiving unit; a charging device; and a heater. The power storage device stores electric power to be supplied to the motor. The electric power receiving unit receives electric power supplied from a power supply external to the vehicle. The charging device is configured to convert a voltage of electric power input from the electric power receiving unit and charge the power storage device. The heater receives operation power from the charging device and warms up the internal combustion engine. The method for controlling electric power includes the steps of: determining whether or not the heater is electrically connected to the charging device; and controlling the charging device to give higher priority to power feeding to the heater than to charging of the power storage device, when it is determined that the heater is electrically connected to the charging device.

Preferably, the method for controlling electric power further includes the step of changing charging control over the power storage device based on whether or not the heater is electrically connected to the charging device.

Preferably, the method for controlling electric power further includes the step of determining whether or not a temperature of the internal combustion engine is lower than a predefined value. In the step of controlling the charging device, the charging device is controlled to give higher priority to power feeding to the heater than to charging of the power storage device, when it is determined that the temperature is lower than the predefined value and it is determined that the heater is electrically connected to the charging device.

More preferably, the hybrid vehicle further includes an electric-powered air conditioner. The electric-powered air conditioner is operated by the electric power stored in the power storage device or the electric power input from the electric power receiving unit. The electric-powered air conditioner conditions air in a vehicle interior before a user gets in the vehicle, based on a pre-air-conditioning command for requesting air conditioning of the vehicle interior before the user gets in the vehicle. In the step of controlling the charging device, the charging device is controlled to give higher priority to power feeding to the heater than to charging of the power storage device and operation of the electric-powered air conditioner.

Preferably, the hybrid vehicle further includes an electrically heated catalyst device. The electrically heated catalyst device receives electric power from the power storage device and purifies exhaust gas discharged from the internal combustion engine. The method for controlling electric power further includes the step of exercising electric power control to give higher priority to power feeding to the electrically heated catalyst device than to power feeding to the heater, when startup of the internal combustion engine is anticipated.

### EFFECTS OF THE INVENTION

In the present invention, the power storage device can be charged from the power supply external to the vehicle. In addition, the heater for receiving the operation power from the charging device and warming up the internal combustion engine is provided. When the heater is electrically connected to the charging device, the charging device is controlled to feed electric power to the heater. Therefore, it is unnecessary to separately provide a power cable for power feeding from the power supply external to the vehicle to the heater. In addition, the charging device is controlled to give higher priority to power feeding to the heater than to charging of the power storage device. Therefore, power feeding to the heater is attained even if the power storage device cannot be charged sufficiently from the power supply external to the vehicle.

Hence, according to the present invention, the user's convenience can be taken into consideration and the internal combustion engine can be appropriately warmed up.

### BRIEF DESCRIPTION OF THE DRAWINGS

Fig. 1 is an overall block diagram of a plug-in hybrid vehicle according to a first embodiment of the present invention.
Fig. 2 illustrates a collinear chart of a power split device.
Fig. 3 is a configuration diagram of a charger and an ECU shown in Fig. 1.
Fig. 4 is a flowchart for describing a control structure of the ECU shown in Fig. 3.
Fig. 5 is a flowchart of a block heater operation determination process shown in Fig. 4.
Fig. 6 is a flowchart of a pre-air-conditioning operation determination process shown in Fig. 4.
Fig. 7 is a flowchart of an external charging control process shown in Fig. 4.
Fig. 8 is a flowchart for describing the operation of an ECU in a modification of the first embodiment at the time of traveling.
Fig. 9 is an overall block diagram of a plug-in hybrid vehicle according to a second embodiment.
Fig. 10 is a configuration diagram of a charger and an ECU shown in Fig. 9.
Fig. 11 is a flowchart for describing the operation of the ECU shown in Fig. 10 at the time of traveling.
Fig. 12 is a configuration diagram of an electrical system of a plug-in hybrid vehicle according to a third embodiment.
Fig. 13 illustrates a zero-phase equivalent circuit of first and second inverters as well as first and second MGs shown in Fig. 12.
Fig. 14 is a configuration diagram when a switch is provided in order that a user can switch between the operation and the non-operation of the block heater.

### MODES FOR CARRYING OUT THE INVENTION

Embodiments of the present invention will be hereinafter described in detail with reference to the drawings. The same or corresponding portions are represented by the same reference characters in the drawings, and description thereof will not be repeated.

### [First Embodiment]

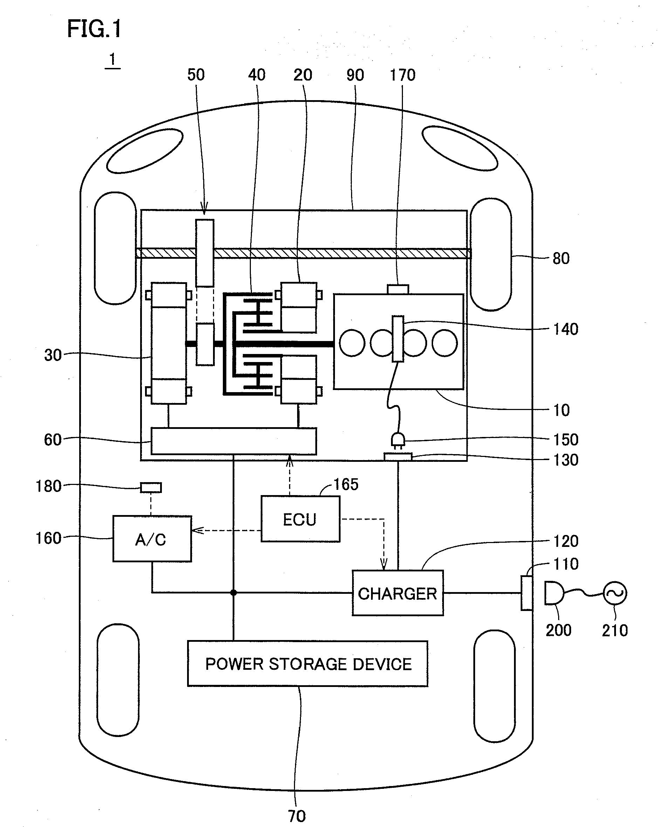

Fig. 1 is an overall block diagram of a plug-in hybrid vehicle according to a first embodiment of the present invention. Referring to Fig. 1, this plug-in hybrid vehicle 1 includes an engine 10, a first MG (Motor Generator) 20, a second MG 30, a power split device 40, a reduction gear 50, a motor drive device 60, a power storage device 70, a drive wheel 80, and an engine room 90. Plug-in hybrid vehicle 1 further includes a charging port 110, a charger 120, a power supply port 130, a block heater 140, a power supply plug 150, an electric-powered air conditioner 160, an ECU (Electronic Control Unit) 165, and temperature sensors 170 and 180.

Engine 10, first MG 20 and second MG 30 are coupled to power split device 40. This plug-in hybrid vehicle 1 travels by using driving force from at least one of engine 10 and second MG 30. Motive power generated by engine 10 is split by power split device 40 into two paths, that is, one path through which the motive power is transmitted to drive wheel 80 via reduction gear 50, and the other through which the motive power is transmitted to first MG 20.

First MG 20 and second MG 30 are AC rotating electric machines, and are three-phase AC synchronous motors, for example. First MG 20 and second MG 30 are driven by motor drive device 60. First MG 20 generates electric power by using the motive power of engine 10 split by power split device 40. For example, when a state of charge (that will also be referred to as "SOC (State of Charge)" hereinafter) of power storage device 70 falls below a predetermined value, engine 10 starts and electric power is generated by first MG 20. The electric power generated by first MG 20 is converted from AC to DC by motor drive device 60, and then is stored in power storage device 70.

Second MG 30 generates driving force by using at least one of the electric power stored in power storage device 70 and the electric power generated by first MG 20. The driving force of second MG 30 is transmitted to drive wheel 80 via reduction gear 50. As a result, second MG 30 assists engine 10 or causes the vehicle to travel by using the driving force from second MG 30. Although drive wheel 80 is shown as a front wheel in Fig. 1, a rear wheel may be driven by second MG 30, instead of the front wheel or together with the front wheel.

It is noted that, at the time of braking and the like of the vehicle, second MG 30 is driven by drive wheel 80 via reduction gear 50, and second MG 30 is operated as a generator. As a result, second MG 30 is operated as a regenerative brake for converting kinetic energy of the vehicle to electric power. The electric power generated by second MG 30 is stored in power storage device 70.

Power split device 40 is formed of a planetary gear including a sun gear, a pinion gear, a carrier, and a ring gear. The pinion gear engages the sun gear and the ring gear. The carrier rotatably supports the pinion gear, and in addition, is coupled to a crankshaft of engine 10. The sun gear is coupled to a rotation shaft of first MG 20. The ring gear is coupled to a rotation shaft of second MG 30 and reduction gear 50.

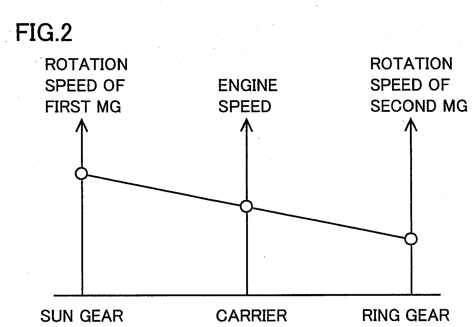

Engine 10, first MG 20 and second MG 30 are coupled with power split device 40 formed of the planetary gear being interposed therebetween, so that the relationship between rotation speeds of engine 10, first MG 20 and second MG 30 is such that they are connected by a straight line in a collinear chart as shown in Fig. 2.

Referring again to Fig. 1, motor drive device 60 receives electric power from power storage device 70 and drives first MG 20 and second MG 30. In addition, motor drive device 60 converts AC electric power generated by first MG 20 and/or second MG 30 to DC electric power, and outputs the DC electric power to power storage device 70.

Block heater 140 is attached to engine 10, and can warm up engine 10 by receiving electric power input from power supply plug 150 and producing heat. A known block heater can be used as this block heater 140.

Power supply port 130 is electrically connected to charger 120 (that will be described hereinafter). By connecting power supply plug 150 of block heater 140 to power supply port 130, electric power can be fed from charger 120 to block heater 140. Power supply plug 150 is configured to be attachable/detachable from/to power supply port 130 by the user.

Temperature sensor 170 detects the temperature of engine 10 and outputs the detected value to ECU 165. It is noted that temperature sensor 170 may directly detect the surface temperature of engine 10 or may estimate the temperature of engine 10 by detecting the temperature of the cooling water of engine 10. In the following, temperature sensor 170 is configured to detect the temperature of the cooling water of engine 10.

Engine 10, first MG 20, second MG 30, power split device 40, reduction gear 50, motor drive device 60, block heater 140, power supply port 130, and temperature sensor 170 are placed within engine room 90.

Power storage device 70 is a rechargeable DC power supply, and is formed of a secondary battery such as nickel-metal hydride and lithium ion, for example. The voltage of power storage device 70 is, for example, about 200 V. In addition to the electric power generated by first MG 20 and second MG 30, electric power supplied from a power supply 210 external to the vehicle is stored in power storage device 70, as will be described hereinafter. It is noted that a large-capacitance capacitor can also be employed as power storage device 70.

Charging port 110 is an electric power interface for receiving electric power from power supply 210 external to the vehicle. At the time of charging of power storage device 70 from power supply 210, a connector 200 of a charging cable through which electric power is supplied from power supply 210 to the vehicle is connected to charging port 110.

Charger 120 is electrically connected to charging port 110, power storage device 70 and power supply port 130. When connector 200 of the charging cable is connected to charging port 110, charger 120 converts the voltage of the electric power supplied from power supply 210 to the voltage level of power storage device 70, and charges power storage device 70. At this time, when power supply plug 150 of block heater 140 is connected to power supply port 130 within engine room 90, charger 120 outputs the electric power supplied from power supply 210, to block heater 140. When power supply plug 150 is not connected to power supply port 130, charger 120 does not output the electric power to power supply port 130. A configuration of charger 120 will be described later in detail.

Electric-powered air conditioner 160 operates by receiving electric power from power storage device 70 or charger 120. Electric-powered air conditioner 160 adjusts the temperature of a vehicle interior to a preset temperature, based on a value detected by temperature sensor 180 for detecting the temperature of the vehicle interior. In addition, this electric-powered air conditioner 160 is configured to be capable of performing pre-air conditioning by which air in the vehicle interior is conditioned before the user gets in the vehicle, based on a pre-air-conditioning command set by the user.

ECU 165 generates drive signals for driving motor drive device 60, charger 120 and electric-powered air conditioner 160, and outputs the generated drive signals to motor drive device 60, charger 120 and electric-powered air conditioner 160. A configuration of ECU 165 will be described later in detail.

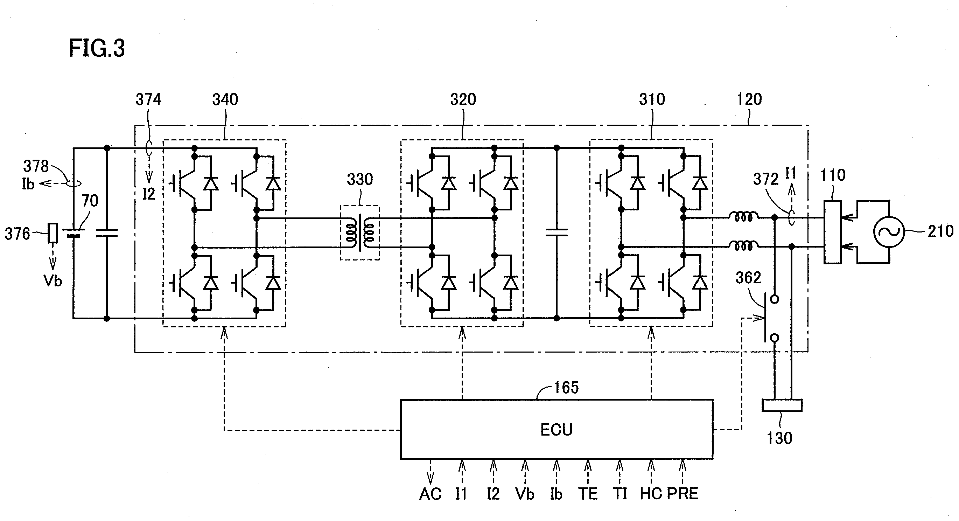

Fig. 3 is a configuration diagram of charger 120 and ECU 165 shown in Fig. 1. Referring to Fig. 3, charger 120 includes AC/DC converting units 310 and 340, a DC/AC converting unit 320, an insulating transformer 330, a relay 362, and current sensors 372 and 374.

Each of AC/DC converting units 310 and 340 and DC/AC converting unit 320 is formed of a single-phase bridge circuit. AC/DC converting unit 310 converts AC electric power provided from power supply 210 external to the vehicle to charging port 110, to DC electric power and outputs the DC electric power to DC/AC converting unit 320, based on the drive signal from ECU 165. DC/AC converting unit 320 converts the DC electric power supplied from AC/DC converting unit 310 to high-frequency AC electric power and outputs the AC electric power to insulating transformer 330, based on the drive signal from ECU 165.

Insulating transformer 330 includes a core made of a magnetic material, as well as a primary coil and a secondary coil wound around the core. The primary coil and the secondary coil are electrically insulated, and are connected to DC/AC converting unit 320 and AC/DC converting unit 340, respectively. Insulating transformer 330 converts the high-frequency AC electric power received from DC/AC converting unit 320 to the voltage level corresponding to the winding ratio of the primary coil and the secondary coil, and outputs the converted electric power to AC/DC converting unit 340. AC/DC converting unit 340 converts the AC electric power output from insulating transformer 330 to DC electric power and outputs the DC electric power to power storage device 70, based on the drive signal from ECU 165.

Power supply port 130 to which block heater 140 can be connected is connected between AC/DC converting unit 310 and charging port 110 with relay 362 interposed. Relay 362 is turned on/off based on the drive signal from ECU 165.

Current sensor 372 detects a current I1 supplied from power supply 210, and outputs the detected value to ECU 165. Current sensor 374 detects a current 12 output from charger 120 to power storage device 70, and outputs the detected value to ECU 165.

It is noted that a voltage sensor 376 detects a voltage Vb of power storage device 70 and outputs the detected value to ECU 165. A current sensor 378 detects a current Ib input and output from/to power storage device 70, and outputs the detected value to ECU 165.

ECU 165 receives each of the values detected by current sensors 372, 374, 378 and voltage sensor 376. In addition, ECU 165 receives each of detected values of temperatures TE and TI detected by temperature sensors 170 and 180 (Fig. 1), respectively. Furthermore, ECU 165 receives a signal HC indicating whether or not power supply plug 150 of block heater 140 (Fig. 1) is connected to power supply port 130. Furthermore, ECU 165 receives a pre-air-conditioning command PRE indicating whether or not to perform pre-air conditioning by which air in the vehicle interior is conditioned before the user gets in the vehicle. It is noted that whether or not power supply plug 150 is connected to power supply port 130 can be sensed by, for example, a sensor. In addition, pre-air-conditioning command PRE is set by the user who requests pre-air conditioning to be performed.

Then, based on each signal described above, ECU 165 controls charging of power storage device 70 from power supply 210, power feeding to block heater 140 connected to power supply port 130, and pre-air conditioning by using electric-powered air conditioner 160 (Fig. 1), in a coordinated manner, by using a method that will be described hereinafter.

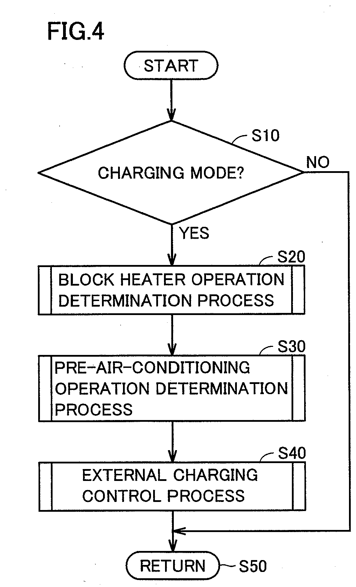

Fig. 4 is a flowchart for describing a control structure of ECU 165 shown in Fig. 3. It is noted that the process in this flowchart is called for execution from a main routine at regular time intervals or whenever a predefined condition is satisfied.

Referring to Fig. 4, ECU 165 determines whether or not the operation mode of the vehicle is the charging mode (step S10). For example, when it is sensed that connector 200 (Fig. 1) of power supply 210 is connected to charging port 110 (Fig. 1), ECU 165 determines that the operation mode of the vehicle is the charging mode. If it is determined that the operation mode is not the charging mode (NO in step S10), ECU 165 does not execute the subsequent process and moves the process to step S50.

If it is determined in step S10 that the operation mode is the charging mode (YES in step S10), ECU 165 executes a block heater operation determination process (step S20). Next, ECU 165 executes a pre-air-conditioning operation determination process (step S30). Subsequently, ECU 165 executes an external charging control process (step S40).

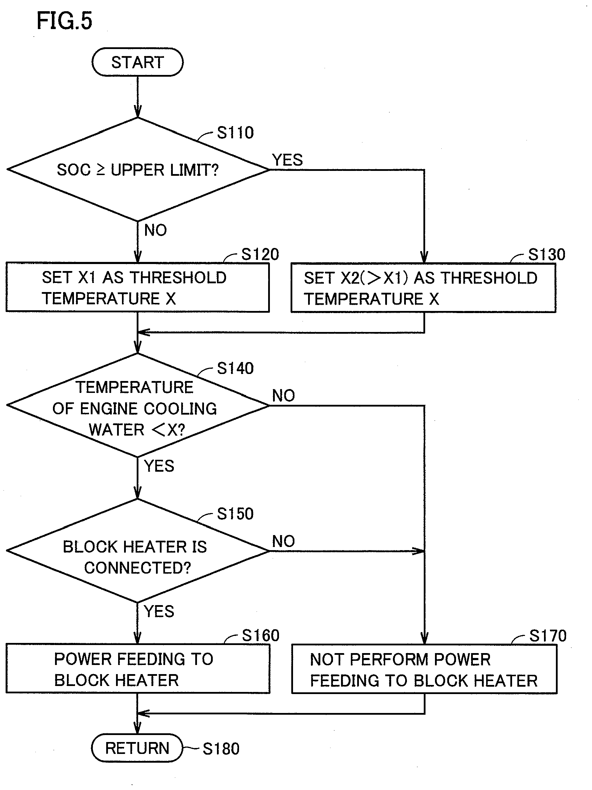

Fig. 5 is a flowchart of the block heater operation determination process shown in Fig. 4. Referring to Fig. 5, ECU 165 calculates an SOC (indicated by 0 to 100 % with respect to the fully charged state) of power storage device 70, based on the detected values of voltage Vb and current Ib of power storage device 70, and determines whether or not the calculated SOC is higher than or equal to a prescribed upper limit (step S110). It is noted that this upper limit is a determination value for determining that charging of power storage device 70 is completed. In addition, a known method can be used as a method for calculating the SOC.

If it is determined in step S110 that the SOC of power storage device 70 is lower than the upper limit (NO in step S110 110), that is, if it is determined that charging of power storage device 70 is not completed, ECU 165 sets a value XI (e.g., -30°C) as a threshold temperature X of the temperature of the cooling water of engine 10 (step S120). This value XI is a threshold temperature for determining whether or not warm-up of engine 10 by block heater 140 has higher priority than charging of power storage device 70 in order to prevent the state in which engine 10 cannot be started due to extremely low temperature.

On the other hand, if it is determined in step S110 I 10 that the SOC of power storage device 70 is higher than or equal to the upper limit (YES in step S110), that is, if it is determined that charging of power storage device 70 is completed, ECU 165 sets a value X2 (e.g., 0°C) that is higher than value XI, as threshold temperature X of the temperature of the cooling water of engine 10 (step S130). This value X2 is a threshold temperature for determining whether or not block heater 140 warms up engine 10 after charging of power storage device 70 is completed, from the viewpoint of preventing deterioration of the fuel efficiency and the like.

Next, ECU 165 determines whether or not the temperature of the cooling water of engine 10 is lower than threshold temperature X, based on the detected value of temperature TE from temperature sensor 170 (Fig. 1) (step S140). If it is determined that the temperature of the cooling water of engine 10 is lower than threshold temperature X (YES in step S140), ECU 165 determines whether or not power supply plug 150 of block heater 140 is connected to power supply port 130 (Fig. 1), based on signal HC (step S150). If it is determined that block heater 140 is connected to power supply port 130 (YES in step S150), ECU 165 turns on relay 362 (Fig. 3). As a result, electric power is fed to block heater 140 (step S160).

On the other hand, if it is determined in step S140 that the temperature of the cooling water of engine 10 is higher than or equal to threshold temperature X (NO in step S140), or if it is determined in step S150 that block heater 140 is not connected to power supply port 130 (NO in step S150), ECU 165 turns off relay 362. As a result, electric power is not fed to block heater 140 (step S170).

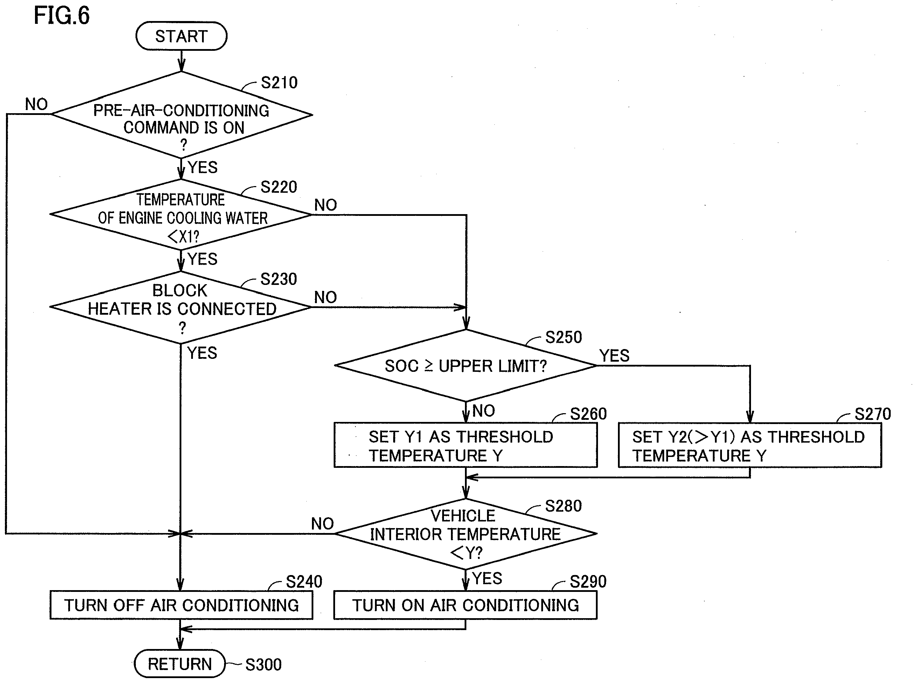

Fig. 6 is a flowchart of the pre-air-conditioning operation determination process shown in Fig. 4. Referring to Fig. 6, ECU 165 determines whether or not pre-air-conditioning command PRE indicating whether or not to perform pre-air conditioning by which air in the vehicle interior is conditioned before the user gets in the vehicle is ON (step S210). If pre-air-conditioning command PRE is OFF (NO in step S210), ECU 165 moves the process to step S240, and air conditioning by electric-powered air conditioner 160 (Fig. 1) is turned off (step S240).

If it is determined in step S210 that pre-air-conditioning command PRE is ON (YES in step S210), ECU 165 determines whether or not the temperature of the cooling water of engine 10 is lower than value X1, based on the detected value of temperature TE from temperature sensor 170 (Fig. 1) (step S220). It is noted that this value X1 is the threshold temperature for determining whether or not warm-up of engine 10 by block heater 140 has higher priority than charging of power storage device 70.

If it is determined in step S220 that the temperature of the cooling water of engine 10 is lower than value X1 (YES in step S220), ECU 165 determines whether or not power supply plug 150 of block heater 140 is connected to power supply port 130 (Fig. 1), based on signal HC (step S230). If it is determined that block heater 140 is connected to power supply port 130 (YES in step S230), ECU 165 moves the process to step S240. In other words, in this case, although pre-air conditioning is requested, pre-air conditioning is not performed and warm-up of engine 10 by block heater 140 has high priority because the temperature of the cooling water of engine 10 is lower than value X1 and block heater 140 is connected to power supply port 130.

On the other hand, if it is determined in step S220 that the temperature of the cooling water of engine 10 is higher than or equal to value X1 (NO in step S220), or if it is determined in step S230 that block heater 140 is not connected to power supply port 130 (NO in step S230), ECU 165 determines whether or not the SOC of power storage device 70 is higher than or equal to the prescribed upper limit (step S250). It is noted that this upper limit is the determination value for determining that charging of power storage device 70 is completed.

If it is determined in step S250 that the SOC of power storage device 70 is lower than the upper limit (NO in step S250), that is, if it is determined that charging of power storage device 70 is not completed, ECU 165 sets a value Y1 (e.g., 0°C) as a threshold temperature Y of the temperature of the vehicle interior (step S260). On the other hand, if it is determined in step S250 that the SOC of power storage device 70 is higher than or equal to the upper limit (YES in step S250), that is, if it is determined that charging of power storage device 70 is completed, ECU 165 sets a value Y2 (e.g., 10°C) that is higher than value Y1, as threshold temperature Y of the temperature of the vehicle interior (step S270).

Next, ECU 165 determines whether or not the temperature of the vehicle interior is lower than threshold temperature Y, based on the detected value of temperature TI from temperature sensor 180 (Fig. 1) (step S280). If it is determined that the temperature of the vehicle interior is lower than threshold temperature Y (YES in step S280), ECU 165 causes electric-powered air conditioner 160 to operate (step S290). As a result, pre-air conditioning is performed based on pre-air-conditioning command PRE. On the other hand, if it is determined in step S280 that the temperature of the vehicle interior is higher than or equal to threshold temperature Y (NO in step S280), ECU 165 moves the process to step S240.

In this pre-air-conditioning operation determination process, even if pre-air-conditioning command PRE is ON, air conditioning by electric-powered air conditioner 160 is turned off because power feeding to block heater 140 has high priority when the temperature of the engine cooling water is lower than value X1 and block heater 140 is connected to power supply port 130. On the other hand, when electric power is not fed to block heater 140 and when the temperature of the vehicle interior is lower than threshold temperature Y, pre-air conditioning has higher priority than charging of power storage device 70. It is noted that, after charging is completed, larger air-conditioning capability than that obtained during charging can be ensured and threshold temperature Y (Y2) that is higher than that set during charging is set because power feeding to power storage device 70 is unnecessary.

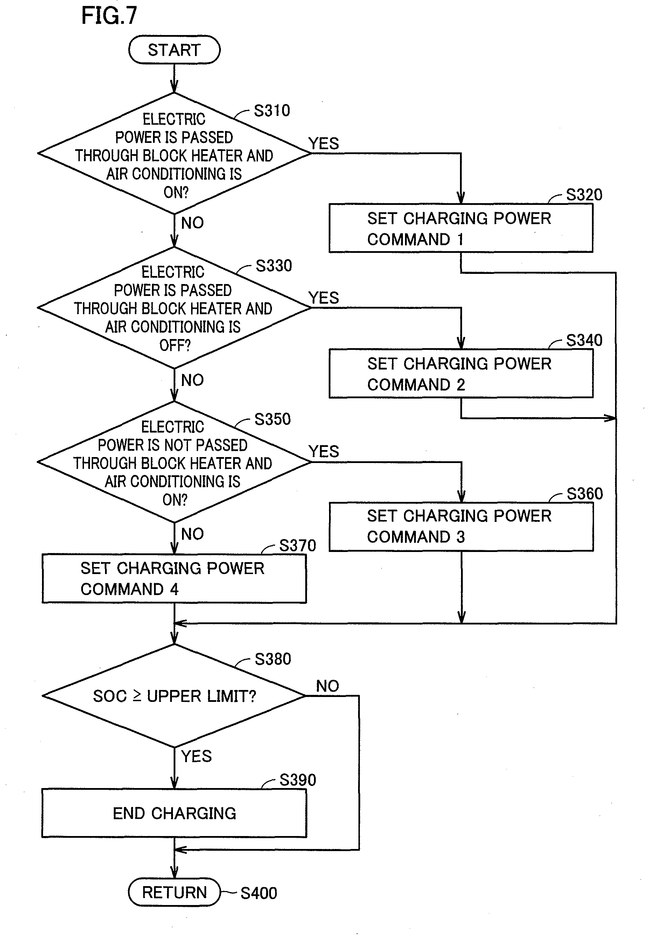

Fig. 7 is a flowchart of the external charging control process shown in Fig. 4. Referring to Fig. 7, if ECU 165 determines that electric power is fed to block heater 140 and air conditioning (pre-air conditioning) by electric-powered air conditioner 160 is performed (YES in step S310), ECU 165 sets a predefined charging power command 1 as a target value of electric power for charging power storage device 70 (step S320). This charging power command 1 is a value obtained by subtracting rated power of block heater 140 and electric-powered air conditioner 160 from rated power that can be supplied from power supply 210 (Fig. 1) external to the vehicle.

If ECU 165 determines that electric power is fed to block heater 140 and air conditioning (pre-air conditioning) by electric-powered air conditioner 160 is turned off (YES in step S330), ECU 165 sets a predefined charging power command 2 as the target value of the electric power for charging power storage device 70 (step S340). This charging power command 2 is a value obtained by subtracting the rated power of block heater 140 from the rated power that can be supplied from power supply 210.

If ECU 165 determines that electric power is not fed to block heater 140 and air conditioning (pre-air conditioning) by electric-powered air conditioner 160 is performed (YES in step S350), ECU 165 sets a predefined charging power command 3 as the target value of the electric power for charging power storage device 70 (step S360). This charging power command 3 is a value obtained by subtracting the rated power of electric-powered air conditioner 160 from the rated power that can be supplied from power supply 210.

If ECU 165 determines that neither power feeding to block heater 140 nor air conditioning (pre-air conditioning) by electric-powered air conditioner 160 is performed (NO in step S350), ECU 165 sets a predefined charging power command 4 as the target value of the electric power for charging power storage device 70 (step S370). This charging power command 4 corresponds to the rated power that can be supplied from power supply 210.

Then, until it is determined that the SOC of power storage device 70 is higher than or equal to the prescribed upper limit, ECU 165 controls AC/DC converting units 310 and 340 as well as DC/AC converting unit 320 such that power storage device 70 is charged from power supply 210 through AC/DC converting unit 310, DC/AC converting unit 320, insulating transformer 330, and AC/DC converting unit 340 in turn, in accordance with the set charging power command. If it is determined that the SOC of power storage device 70 reaches the upper limit or higher (YES in step S380), ECU 165 determines that charging of power storage device 70 is completed and ends charging of power storage device 70 (step S390).

It is noted that the magnitude relationship between above charging power commands 1 to 4 is charging power command 1 < charging power commands 2 and 3 < charging power command 4. In other words, power feeding to block heater 140 and power feeding to electric-powered air conditioner 160 for pre-air conditioning have higher priority than charging of power storage device 70. It is noted that, as shown in Fig. 6, power feeding to block heater 140 has higher priority than power feeding to electric-powered air conditioner 160 for pre-air conditioning.

It is noted that charging power commands 1 to 3 may be set to 0 in the above. In other words, charging of power storage device 70 may not be performed when at least one of power feeding to block heater 140 and power feeding to electric-powered air conditioner 160 for pre-air conditioning is performed.

As in the foregoing, in the present first embodiment, block heater 140 can be electrically connected to charger 120. Since electric power is fed from charger 120 to block heater 140 when block heater 140 is electrically connected to charger 120, it is unnecessary to separately provide a power cable for power feeding from the power supply external to the vehicle to block heater 140. In addition, since charger 120 is controlled to give higher priority to power feeding to block heater 140 than to charging of power storage device 70, power feeding to block heater 140 is attained even if power storage device 70 cannot be charged sufficiently from the power supply external to the vehicle. Hence, according to the present first embodiment, the user's convenience can be taken into consideration and engine 10 can be appropriately warmed up.

In addition, in the present first embodiment, power supply port 130 for receiving electric power from charger 120 is provided within engine room 90 and block heater 140 is configured to be attachable/detachable from/to power supply port 130. Hence, according to the present first embodiment, whether or not to use block heater 140 can be readily changed, depending on the user's intention.

Furthermore, in the present first embodiment, charger 120 controls charging of power storage device 70 from power supply 210, power feeding to block heater 140 connected to power supply port 130, and pre-air conditioning by electric-powered air conditioner 160, in a coordinated manner. Specifically, priority, from highest to lowest, is given to power feeding to block heater 140, pre-air conditioning and charging of power storage device 70, and charging of power storage device 70 is controlled so as not to exceed the rated power that can be supplied from power supply 210. Hence, according to the present first embodiment, the optimum electric power management is achieved within the range of the rated power that can be supplied from power supply 210.

### [Modification]

The plug-in hybrid vehicle travels by giving higher priority to the use of the electric power stored in the power storage device than to the use of fuel of the engine. Therefore, unless large driving force for traveling is requested, the engine does not start until the SOC of the power storage device decreases. Accordingly, the engine that was warmed up at the time of charging of the power storage device from the power supply external to the vehicle may cool down during traveling, and the startability of the engine may deteriorate at the time of traveling. Thus, in the above first embodiment, power supply port 130 to which block heater 140 can be connected is provided within engine room 90 and connected to charger 120, so that electric power can be fed from power storage device 70 through charger 120 to block heater 140 at the time of traveling.

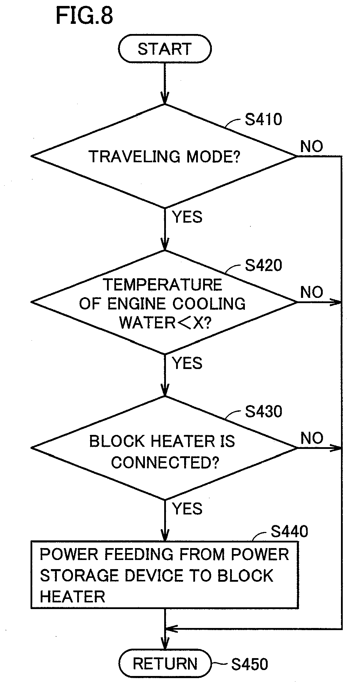

Fig. 8 is a flowchart for describing the operation of ECU 165 in a modification of the first embodiment at the time of traveling. It is noted that the process in this flowchart is also called for execution from a main routine at regular time intervals or whenever a predefined condition is satisfied.

Referring to Fig. 8, ECU 165 determines whether or not the operation mode of the vehicle is the traveling mode (step S410). For example, when a start switch for activating the vehicle system, an ignition switch or the like is ON, ECU 165 determines that the operation mode is the traveling mode. If it is determined that the operation mode is not the traveling mode (NO in step S410), ECU 165 does not execute the subsequent process and moves the process to step S450.

If it is determined in step S410 that the operation mode is the traveling mode (YES in step S410), ECU 165 determines whether or not the temperature of the cooling water of engine 10 is lower than threshold temperature X, based on the detected value of temperature TE from temperature sensor 170 (Fig. 1) (step S420). If it is determined that the temperature of the cooling water of engine 10 is lower than threshold temperature X (YES in step S420), ECU 165 determines whether or not power supply plug 150 of block heater 140 is connected to power supply port 130 (Fig. 1), based on signal HC (step S430).

If it is determined that block heater 140 is connected to power supply port 130 (YES in step S430), ECU 165 turns on relay 362 (Fig. 3), and in addition, controls AC/DC converting units 310 and 340 as well as DC/AC converting unit 320 such that electric power is fed from power storage device 70 through AC/DC converting unit 340, insulating transformer 330, DC/AC converting unit 320, and AC/DC converting unit 310 in turn to block heater 140 (step S440).

On the other hand, if it is determined in step S420 that the temperature of the cooling water of engine 10 is higher than or equal to threshold temperature X (NO in step S420), or if it is determined in step S430 that block heater 140 is not connected to power supply port 130 (NO in step S430), ECU 165 moves the process to step S450.

As in the foregoing, according to the present modification, electric power is fed from power storage device 70 to block heater 140 connected to power supply port 130 at the time of traveling as well, and thereby, engine 10 can be warmed up.

### [Second Embodiment]

In the present second embodiment, a configuration is described, in which an electrically heated catalyst (that will also be referred to as "EHC (Electrically Heated Catalyst)" hereinafter) is provided at an exhaust path of engine 10, and electric power can be fed from power storage device 70 to block heater 140 and the EHC at the time of traveling.

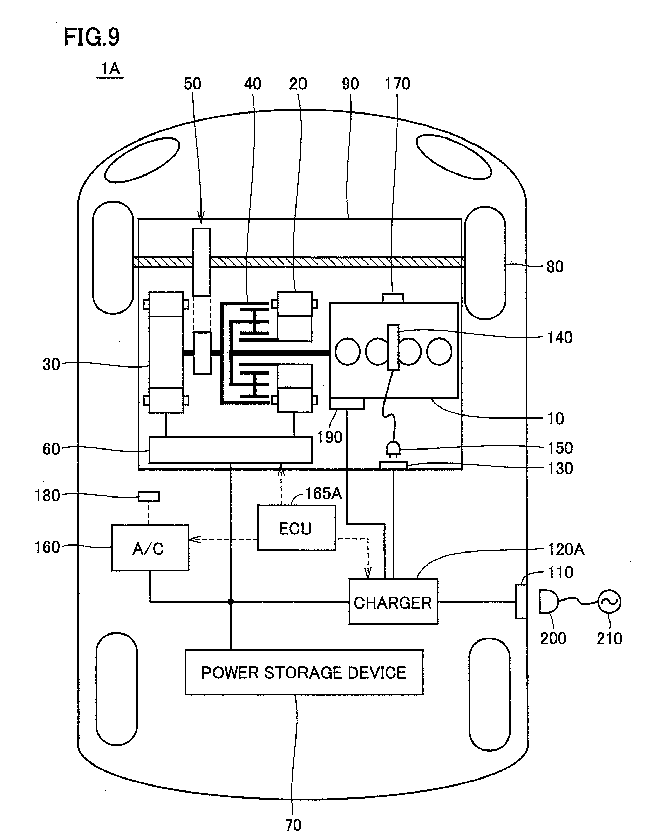

Fig. 9 is an overall block diagram of a plug-in hybrid vehicle according to the second embodiment. Referring to Fig. 9, this plug-in hybrid vehicle 1A further includes an EHC 190 and includes a charger 120A and an ECU 165A instead of charger 120 and ECU 165, respectively, as compared with the configuration of plug-in hybrid vehicle 1 shown in Fig. 1.

EHC 190 is an electrically heated catalyst device for purifying exhaust gas and is provided at the exhaust path of engine 10. EHC 190 is electrically connected to charger 120A and receives operation power from charger 120A.

Charger 120A is electrically connected to charging port 110, power storage device 70, power supply port 130, and EHC 190. Charger 120A is configured to be capable of supplying electric power from power storage device 70 to EHC 190 and power supply port 130 in the traveling mode.

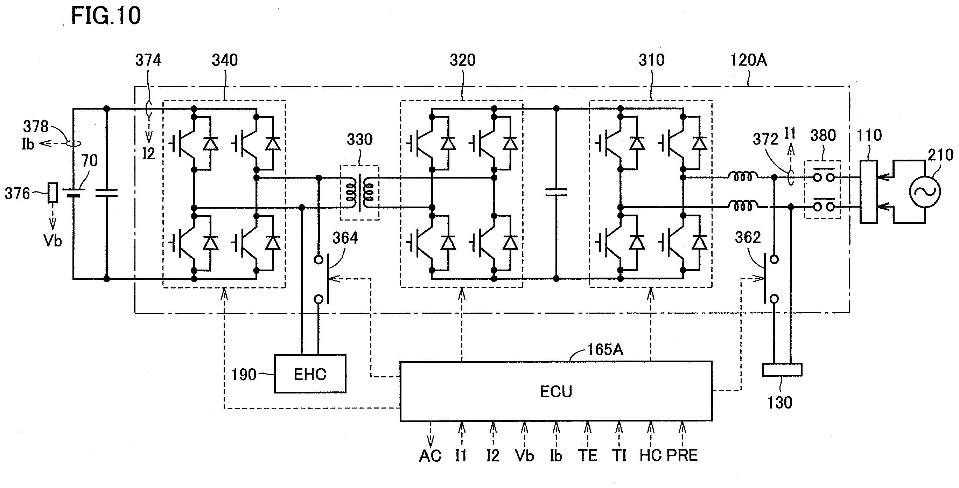

Fig. 10 is a configuration diagram of charger 120A and ECU 165A shown in Fig. 9. Referring to Fig. 10, charger 120A further includes relays 364 and 380 as compared with the configuration of charger 120 shown in Fig. 3.

EHC 190 is connected between AC/DC converting unit 340 and insulating transformer 330 with relay 364 interposed. Relay 364 is turned on/off based on a drive signal from ECU 165A.

In a power line through which electric power is input from charging port 110, relay 380 is placed between a connection node of power supply port 130 and charging port 110. Relay 380 is turned on/off by ECU 165A.

In the traveling mode, ECU 165A controls power feeding from power storage device 70 to EHC 190 and power feeding to block heater 140 connected to power supply port 130, in a coordinated manner, by using a method that will be described hereinafter. In addition, ECU 165A turns off relay 380 such that a voltage is not applied to charging port 110, at the time of power feeding from power storage device 70 to EHC 190 and block heater 140.

It is noted that the remaining configuration of charger 120A is the same as that of charger 120 in the first embodiment.

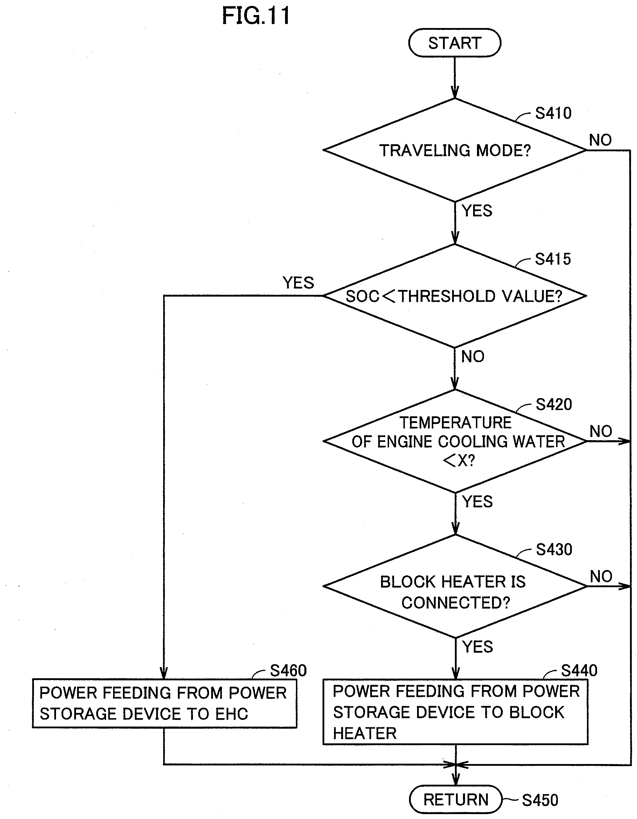

Fig. 11 is a flowchart for describing the operation of ECU 165A shown in Fig. 10 at the time of traveling. It is noted that the process in this flowchart is also called for execution from a main routine at regular time intervals or whenever a predefined condition is satisfied.

Referring to Fig. 11, this flowchart further includes steps S415 and S460 as compared with the flowchart shown in Fig. 8. In other words, if it is determined in step S410 that the operation mode is the traveling mode (YES in step S410), ECU 165A determines whether or not the SOC of power storage device 70 is lower than a prescribed threshold value (step S415). It is noted that this threshold value is a value for determining that startup of engine 10 is requested soon to charge power storage device 70, and can be set to a value that is slightly higher than a lower limit of the SOC at which startup of engine 10 is requested.

If it is determined in step S415 that the SOC of power storage device 70 is lower than the threshold value (YES in step S415), startup of engine 10 is anticipated. Then, ECU 165A turns on relay 364 (Fig. 10), and in addition, controls AC/DC converting unit 340 such that electric power is fed from power storage device 70 through AC/DC converting unit 340 to EHC 190 (step S460). In other words, when startup of engine 10 is anticipated, power feeding to EHC 190 has high priority even if a condition for power feeding to block heater 140 is satisfied.

On the other hand, if it is determined in step S415 that the SOC of power storage device 70 is higher than or equal to the threshold value (NO in step S415), ECU 165A moves the process to step S420.

As in the foregoing, according to the present second embodiment, electric power can be fed to EHC 190 and block heater 140 at the right time.

### [Third Embodiment]

In each of the above embodiments, the AC electric power supplied from power supply 210 external to the vehicle is converted to DC electric power by charger 120 (120A) and power storage device 70 is charged with the DC electric power. In the present third embodiment, a configuration is described, in which the AC electric power supplied from power supply 210 external to the vehicle is provided to neutral points of first MG 20 and second MG 30 and power storage device 70 is charged by using an inverter that configures motor drive device 60, and in addition, electric power can be fed from power supply 210 to block heater 140.

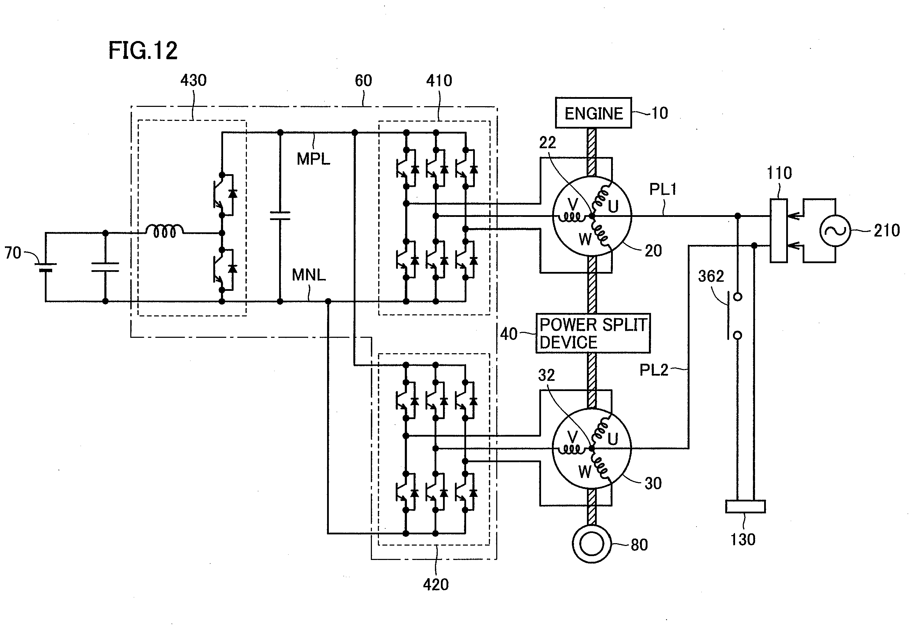

Fig. 12 is a configuration diagram of an electrical system of a plug-in hybrid vehicle according to the third embodiment. Referring to Fig. 12, a power line PL1 has one end connected to a neutral point 22 of first MG 20, and a power line PL2 has one end connected to a neutral point 32 of second MG 30. Power lines PL1 and PL2 have the other ends connected to charging port 110. Power supply port 130 to which block heater 140 can be connected is connected to power lines PL1 and PL2 with relay 362 interposed therebetween.

Motor drive device 60 for driving first MG 20 and second MG 30 includes a first inverter 410, a second inverter 420 and a boost converter 430.

First inverter 410 and second inverter 420 are provided correspondingly to first MG 20 and second MG 30, respectively, and connected to a main positive bus MPL and a main negative bus MNL with first inverter 410 and second inverter 420 in parallel. Each of first inverter 410 and second inverter 420 is formed of a three-phase bridge circuit.

First inverter 410 receives electric power from main positive bus MPL and main negative bus MNL, and drives first MG 20. In addition, first inverter 410 receives motive power of engine 10, converts AC electric power generated by first MG 20 to DC electric power, and outputs the DC electric power to main positive bus MPL and main negative bus MNL.

Second inverter 420 receives electric power from main positive bus MPL and main negative bus MNL, and drives second MG 30. In addition, at the time of braking of the vehicle, second inverter 420 receives rotational force of drive wheel 80, converts AC electric power generated by second MG 30 to DC electric power, and outputs the DC electric power to main positive bus MPL and main negative bus MNL.

In addition, when power storage device 70 is charged from power supply 210 external to the vehicle, first inverter 410 and second inverter 420 convert, to DC electric power, AC electric power provided from power supply 210 through power lines PL1 and PL2 to neutral point 22 of first MG 20 and neutral point 32 of second MG 30, and outputs the converted DC electric power to main positive bus MPL and main negative bus MNL, by using a method that will be described hereinafter.

Boost converter 430 is provided between power storage device 70 and main positive bus MPL as well as main negative bus MNL. Boost converter 430 is formed of a DC chopper circuit including a reactor and two switching elements. Boost converter 430 adjusts the voltage between main positive bus MPL and main negative bus MNL to a predefined voltage that is higher than or equal to the voltage of power storage device 70.

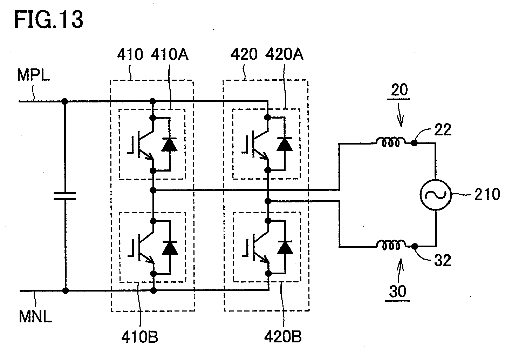

Fig. 13 illustrates a zero-phase equivalent circuit of first and second inverters 410 and 420 as well as first and second MGs 20 and 30 shown in Fig. 12. Each of first inverter 410 and second inverter 420 is formed of a three-phase bridge circuit as shown in Fig. 12, and there are eight patterns of on/off combinations of six switching elements in each inverter. In the two of the eight switching patterns, an interphase voltage becomes zero, and such a voltage state is referred to as a zero voltage vector. The zero voltage vector can be understood that the three switching elements of the upper arm are in the same switching state (all ON or OFF), and similarly, the three switching elements of the lower arm are in the same switching state.

During charging of power storage device 70 from power supply 210 external to the vehicle, the zero voltage vector is controlled in first inverter 410 and second inverter 420. Therefore, in this Fig. 13, the three switching elements of the upper arm of first inverter 410 are collectively shown as an upper arm 410A, and the three switching elements of the lower arm of first inverter 410 are collectively shown as a lower arm 410B. Similarly, the three switching elements of the upper arm of second inverter 420 are collectively shown as an upper arm 420A, and the three switching elements of the lower arm of second inverter 420 are collectively shown as a lower arm 420B.

As shown in Fig. 13, this zero-phase equivalent circuit can be regarded as a single-phase PWM converter that accepts an input of the single-phase AC electric power provided from power supply 210 to neutral point 22 of first MG 20 and neutral point 32 of second MG 30. Thus, by changing the zero voltage vector in first inverter 410 and second inverter 420 and controlling switching of first inverter 410 and second inverter 420 so that first inverter 410 and second inverter 420 operate as the arms of the single-phase PWM converter, the AC electric power supplied from power supply 210 can be converted to DC electric power and power storage device 70 can be charged.

Referring again to Fig. 12, in the present third embodiment, first MG 20, second MG 30 and motor drive device 60 implement the charging function by charger 120 in the first embodiment. Power supply port 130 to which block heater 140 is connected is connected to power lines PL1 and PL2 with relay 362 interposed therebetween, and block heater 140 connected to power supply port 130 and charging of power storage device 70 are controlled in a coordinated manner, as in the first embodiment.

As in the foregoing, in the present third embodiment, first MG 20, second MG 30 and motor drive device 60 implement the function of charger 120 in the first embodiment. Hence, according to the present third embodiment, since it is unnecessary to separately provide charger 120, reduction in size and weight of the vehicle can be achieved.

It is noted that, in the electrical system shown in Fig. 12, EHC 190 is connected between power storage device 70 and motor drive device 60 or to main positive bus MPL and main negative bus MNL with a voltage converter interposed, and thereby, power feeding from power storage device 70 to EHC 190 and power feeding to block heater 140 connected to power supply port 130 can be controlled in a coordinated manner in the traveling mode, as in the above second embodiment. Alternatively, EHC 190 may be connected to power lines PL1 and PL2 in parallel with power supply port 130.

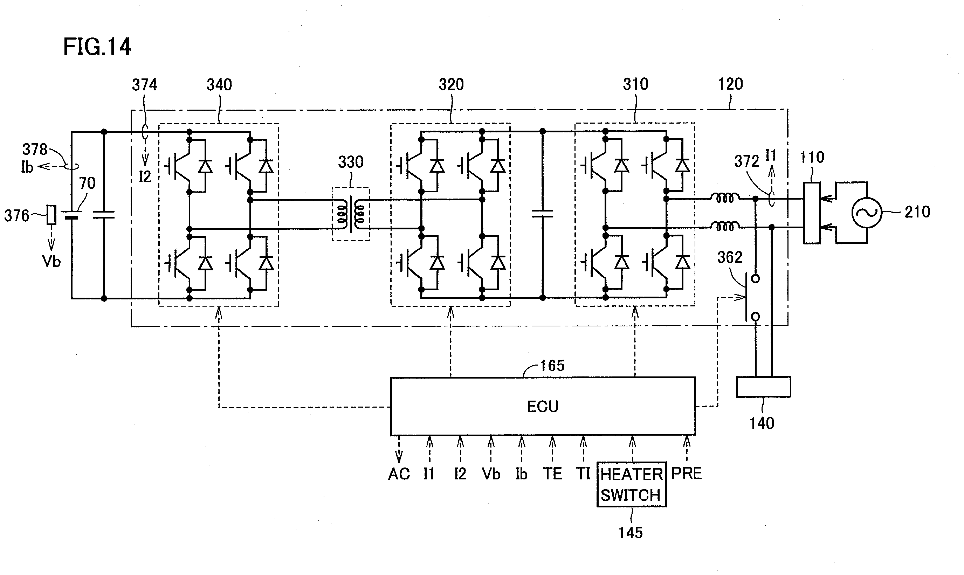

Although power supply port 130 is provided within engine room 90 and block heater 140 is attachable/detachable from/to power supply port 130 in each of the above embodiments, block heater 140 may be directly connected to charger 120 (120A) without providing power supply port 130, and a switch 145 may be provided in order that the user can switch between the operation and the non-operation of block heater 140, as shown in Fig. 14. It is noted that switch 145 may be provided at block heater 140, or may be provided at an instrumental panel and the like in the vehicle interior to be capable of remotely controlling block heater 140.

In addition, although power feeding to block heater 140 has higher priority than charging of power storage device 70, and when the temperature of engine 10 rises and power feeding to block heater 140 ends, power storage device 70 is charged until the SOC reaches the upper limit in the above, an input unit (such as switch) may be provided in order that the user can select whether or not power storage device 70 is charged after power feeding to block heater 140 ends.

It is noted that, in each of the above embodiments, a series/parallel-type hybrid vehicle has been described, in which motive power of engine 10 can be split into drive wheel 80 and first MG 20 by employing power split device 40. The present invention, however, is also applicable to other types of hybrid vehicles. In other words, the present invention is also applicable to, for example, a so-called series-type hybrid vehicle using engine 10 only for driving first MG 20 and generating the driving force of the vehicle by employing only second MG 30, a hybrid vehicle in which only regenerative energy among kinetic energy generated by engine 10 is recovered as electric energy, a motor-assisted-type hybrid vehicle in which an engine is used as a main power source and a motor assists the engine as required, and the like.

It is noted that, in the above, engine 10 corresponds to "internal combustion engine" in the present invention, and second MG 30 corresponds to "motor" in the present invention. In addition, charging port 110 corresponds to "electric power receiving unit" in the present invention, and chargers 120 and 120A correspond to "charging device" in the present invention. Furthermore, block heater 140 corresponds to "heater" in the present invention, and ECUs 165 and 165A correspond to "controller" in the present invention.

Furthermore, temperature sensor 170 corresponds to "first temperature sensor" in the present invention, and temperature sensor 180 corresponds to "second temperature sensor" in the present invention. Furthermore, EHC 190 corresponds to "electrically heated catalyst device" in the present invention, and first MG 20 and first inverter 410 form "electric power generating device" in the present invention.

It should be understood that the embodiments disclosed herein are illustrative and not limitative in any respect. The scope of the present invention is defined by the terms of the claims, rather than the above description of the embodiments.

### DESCRIPTION OF THE REFERENCE SIGNS

1, 1A plug-in hybrid vehicle; 10 engine; 20 first MG; 22, 32 neutral point; 30 second MG; 40 power split device; 50 reduction gear; 60 drive device; 70 power storage device; 80 drive wheel; 90 engine room; 110 charging port; 120, 120A charger; 130 power supply port; 140 block heater; 145 switch; 150 power supply plug; 160 electric-powered air conditioner; 165, 165A ECU; 170, 180 temperature sensor; 190 EHC; 200 connector; 210 power supply; 310, 340 AC/DC converting unit; 320 DC/AC converting unit; 330 insulating transformer; 362, 364, 380 relay; 372, 374, 378 current sensor; 376 voltage sensor; 410, 420 inverter; 410A, 420A upper arm; 410B, 420B lower arm; 430 boost converter; MPL main positive bus; MNL main negative bus; PL1, PL2 power line

## Claims

1. A hybrid vehicle that travels by using motive power output from at least one of an internal combustion engine (10) and a motor (30) for vehicle traveling, comprising:
a power storage device (70) for storing electric power to be supplied to said motor; and
an electric power receiving unit (110) for receiving electric power supplied from a power supply (210) external to the vehicle;
**characterized by** comprising:
a charging device (120, 120A) configured to convert a voltage of electric power input from said electric power receiving unit and charge said power storage device;
a heater (140) for receiving operation power from said charging device and warming up said internal combustion engine; and
a controller (165, 165A) for controlling said charging device to give higher priority to power feeding to said heater than to charging of said power storage device, when said heater is electrically connected to said charging device.

2. The hybrid vehicle according to claim 1, wherein
said controller changes charging control over said power storage device based on whether or not said heater is electrically connected to said charging device.

3. The hybrid vehicle according to claim 1 or 2, further comprising
a power supply port (130) provided within an engine room where said internal combustion engine is housed, for receiving electric power from said charging device, wherein
said heater is configured to be attachable/detachable from/to said power supply port.

4. The hybrid vehicle according to claim 1 or 2, further comprising
a switch (145) for switching between operation and non-operation of said heater, wherein
said controller controls said charging device to give higher priority to power feeding to said heater than to charging of said power storage device, when said switch is ON.

5. The hybrid vehicle according to claim 1 or 2, further comprising
a first temperature sensor (170) for detecting a temperature of said internal combustion engine, wherein
said controller controls charging of said power storage device and power feeding to said heater, based on a value detected by said first temperature sensor and a state of charge of said power storage device.

6. The hybrid vehicle according to claim 5, wherein
said controller controls said charging device to give higher priority to power feeding to said heater than to charging of said power storage device, when the value detected by said first temperature sensor is lower than a first predefined value and said heater is electrically connected to said charging device.

7. The hybrid vehicle according to claim 6, wherein either
said controller controls said charging device to end power feeding to said heater when the value detected by said first temperature sensor reaches said first predefined value or higher, and controls said charging device to charge said power storage device when an amount of a state indicating the state of charge of said power storage device is lower than a second predefined value at the end of power feeding to said heater, or
said controller controls said charging device to charge said power storage device, when said heater is electrically disconnected from said charging device and when an amount of a state indicating the state of charge of said power storage device is lower than a second predefined value.

8. The hybrid vehicle according to claim 5, further comprising:
a second temperature sensor (180) for detecting a temperature of a vehicle interior; and
an electric-powered air conditioner (160) operated by the electric power stored in said power storage device or the electric power input from said electric power receiving unit, wherein
said electric-powered air conditioner conditions air in said vehicle interior before a user gets in the vehicle, based on a pre-air-conditioning command for requesting air conditioning of said vehicle interior before the user gets in the vehicle, and
said controller controls charging of said power storage device, power feeding to said heater and operation of said electric-powered air conditioner, based on further a value detected by said second temperature sensor and said pre-air-conditioning command.

9. The hybrid vehicle according to claim 8, wherein
said controller controls said charging device to give higher priority to power feeding to said heater than to charging of said power storage device and the operation of said electric-powered air conditioner, when the value detected by said first temperature sensor is lower than a predefined value and said heater is electrically connected to said charging device.

10. The hybrid vehicle according to claim 1 or 2, further comprising either
an electrically heated catalyst device (190) for receiving electric power from said power storage device and purifying exhaust gas discharged from said internal combustion engine, wherein
said controller (165A) exercises electric power control to give higher priority to power feeding to said electrically heated catalyst device than to power feeding to said heater, when startup of said internal combustion engine is anticipated, or
an electric power generating device (20, 410) configured to generate electric power by using the motive power output from said internal combustion engine and charge said power storage device, wherein
said controller controls said charging device to feed electric power from said power storage device to said heater, when said electric power receiving unit does not receive electric power from said power supply.

11. A method for controlling electric power of a hybrid vehicle that travels by using motive power output from at least one of an internal combustion engine (10) and a motor (30) for vehicle traveling,
said hybrid vehicle including:
a power storage device (70) for storing electric power to be supplied to said motor; and
an electric power receiving unit (110) for receiving electric power supplied from a power supply (210) external to the vehicle;
**characterized by** the hybrid vehicle including:
a charging device (120, 120A) configured to convert a voltage of electric power input from said electric power receiving unit and charge said power storage device; and
a heater (140) for receiving operation power from said charging device and warming up said internal combustion engine, and
said method for controlling electric power comprising the steps of:
determining whether or not said heater is electrically connected to said charging device; and
controlling said charging device to give higher priority to power feeding to said heater than to charging of said power storage device, when it is determined that said heater is electrically connected to said charging device.

12. The method for controlling electric power of a hybrid vehicle according to claim 11, further comprising the step of
changing charging control over said power storage device based on whether or not said heater is electrically connected to said charging device.

13. The method for controlling electric power of a hybrid vehicle according to claim 11 or 12, further comprising the step of
determining whether or not a temperature of said internal combustion engine is lower than a predefined value, wherein
in the step of controlling said charging device, said charging device is controlled to give higher priority to power feeding to said heater than to charging of said power storage device, when it is determined that said temperature is lower than said predefined value and it is determined that said heater is electrically connected to said charging device.

14. The method for controlling electric power of a hybrid vehicle according to claim 13, wherein
said hybrid vehicle further includes an electric-powered air conditioner (160) operated by the electric power stored in said power storage device or the electric power input from said electric power receiving unit,
said electric-powered air conditioner conditions air in a vehicle interior before a user gets in the vehicle, based on a pre-air-conditioning command for requesting air conditioning of said vehicle interior before the user gets in the vehicle, and
in the step of controlling said charging device, said charging device is controlled to give higher priority to power feeding to said heater than to charging of said power storage device and operation of said electric-powered air conditioner.

15. The method for controlling electric power of a hybrid vehicle according to claim 11 or 12, wherein
said hybrid vehicle further includes an electrically heated catalyst device (190) for receiving electric power from said power storage device and purifying exhaust gas discharged from said internal combustion engine, and
said method for controlling electric power further comprises the step of exercising electric power control to give higher priority to power feeding to said electrically heated catalyst device than to power feeding to said heater, when startup of said internal combustion engine is anticipated.

## Patentansprüche

1. Hybridfahrzeug, das sich unter Verwendung einer von zumindest einer Brennkraftmaschine (10) oder einem Motor (30) abgegebenen Antriebskraft zum Fahren eines Fahrzeugs bewegt, mit:
einer Energiespeichervorrichtung (70) zur Speicherung der dem Motor zuzuführenden elektrischen Leistung; und
einer elektrischen Leistungsempfangseinheit (110) zum Empfang von elektrischer Leistung, die von einer Stromversorgung (210) außerhalb des Fahrzeugs zugeführt wird;
**dadurch gekennzeichnet, dass** sie umfasst:
eine Ladevorrichtung (120, 120A), die dazu eingerichtet ist, eine Spannung einer von der elektrischen Leistungsempfangseinheit eingegebenen elektrischen Leistung umzuwandeln und die Energiespeichervorrichtung aufzuladen;
eine Heizeinrichtung (140) zum Empfang einer Betriebsleistung von der Ladevorrichtung und zum Aufwärmen der Brennkraftmaschine; und
eine Steuerung (165, 165A) zur Steuerung der Ladevorrichtung, um einer Leistungszufuhr zu der Heizeinrichtung eine höhere Priorität als einem Aufladen der Energiespeichervorrichtung zu geben, falls die Heizeinrichtung elektrisch mit der Ladevorrichtung verbunden ist.

2. Hybridfahrzeug nach Anspruch 1, wobei
die Steuerung die Ladesteuerung über die Energiespeichervorrichtung in Abhängigkeit davon ändert, ob die Heizeinrichtung mit der Ladevorrichtung elektrisch verbunden ist oder nicht.

3. Hybridfahrzeug nach Anspruch 1 oder 2, ferner mit
einem Stromversorgungsanschluss (130), der zum Empfang von elektrischer Leistung von der Ladevorrichtung in einem Maschinenraum bereitgestellt ist, in dem die Brennkraftmaschine untergebracht ist, wobei
die Heizeinrichtung derart eingerichtet ist, dass sie an dem Stromversorgungsanschluss angeschlossen/von diesem entfernt werden kann.

4. Hybridfahrzeug nach Anspruch 1 oder 2, ferner mit
einem Schalter (145) zum Umschalten zwischen einem Betrieb und einem Nicht-Betrieb der Heizeinrichtung, wobei
die Steuerung die Ladevorrichtung derart steuert, um der Leistungszufuhr zu der Heizeinrichtung eine höhere Priorität als dem Aufladen der Energiespeichervorrichtung zu geben, falls der Schalter auf EIN steht.

5. Hybridfahrzeug nach Anspruch 1 oder 2, ferner mit
einem ersten Temperatursensor (170) zum Erfassen einer Temperatur der Brennkraftmaschine, wobei
die Steuerung ein Aufladen der Energiespeichervorrichtung und eine Leistungszufuhr zu der Heizeinrichtung auf der Grundlage eines von dem ersten Temperatursensor erfassten Werts und eines Ladezustands der Energiespeichervorrichtung steuert.

6. Hybridfahrzeug nach Anspruch 5, wobei
die Steuerung die Ladevorrichtung steuert, um einer Leistungszufuhr zu der Heizeinrichtung eine höhere Priorität als einem Aufladen der Energiespeichervorrichtung zu geben, falls der von dem ersten Temperatursensor erfasste Wert niedriger als ein erster vordefinierter Wert ist und die Heizeinrichtung mit der Ladevorrichtung elektrisch verbunden ist.

7. Hybridfahrzeug nach Anspruch 6, wobei entweder
die Steuerung die Ladevorrichtung derart steuert, dass sie eine Leistungszufuhr zu der Heizeinrichtung beendet, falls der von dem ersten Temperatursensor erfasste Wert den ersten vordefinierten Wert oder mehr erreicht, und die Ladevorrichtung steuert, um die Leistungsspeichervorrichtung aufzuladen, falls eine den Ladezustand der Leistungsspeichervorrichtung anzeigende Zustandsmenge an dem Ende einer Leistungszufuhr zu der Heizeinrichtung kleiner als ein zweiter vordefinierter Wert ist, oder
die Steuerung die Ladevorrichtung steuert, um die Energiespeichervorrichtung aufzuladen, falls die Heizeinrichtung von der Ladevorrichtung elektrisch getrennt ist und falls eine den Ladezustand der Energiespeichervorrichtung anzeigende Zustandsmenge kleiner als ein zweiter vordefinierter Wert ist.

8. Hybridfahrzeug nach Anspruch 5, ferner mit:
einem zweiten Temperatursensor (180) zum Erfassen einer Temperatur eines Fahrzeuginneren; und
einer elektrisch betriebenen Klimaanlage (160), die durch die in der Energiespeichervorrichtung gespeicherte elektrische Leistung oder die von der elektrischen Leistungsempfangseinheit zugeführte elektrische Leistung betrieben wird, wobei
die elektrisch betriebene Klimaanlage die Luft in dem Fahrzeuginneren vor einem Einsteigen des Benutzers in das Fahrzeug auf der Grundlage eines Vorklimatisierungsbefehls zur Anforderung einer Klimatisierung des Fahrzeuginneren vor dem Einsteigen des Benutzers in das Fahrzeug klimatisiert, und
die Steuerung das Aufladen der Energiespeichervorrichtung, die Leistungszufuhr zu der Heizeinrichtung und einen Betrieb der elektrisch betriebenen Klimaanlage ferner auf der Grundlage eines von dem zweiten Temperatursensor erfassten Werts und dem Vorklimatisierungsbefehl steuert.

9. Hybridfahrzeug nach Anspruch 8, wobei
die Steuerung die Ladevorrichtung steuert, um einer Leistungszufuhr zu der Heizeinrichtung eine höhere Priorität als einem Aufladen der Energiespeichervorrichtung und dem Betrieb der elektrisch betriebenen Klimaanlage zu geben, falls der von dem ersten Temperatursensor erfasste Wert niedriger als ein vordefinierter Wert ist und die Heizeinrichtung mit der Ladevorrichtung elektrisch verbunden ist.

10. Hybridfahrzeug nach Anspruch 1 oder 2, ferner mit entweder
einer elektrisch beheizten Katalysatorvorrichtung (190) zum Empfang von elektrischer Leistung aus der Energiespeichervorrichtung und zur Reinigung von aus der Brennkraftmaschine abgegebenen Abgas, wobei
die Steuerung (165A) eine elektrische Leistungssteuerung ausübt, um einer Leistungszufuhr zu der elektrisch beheizten Katalysatorvorrichtung eine höhere Priorität als einer Leistungszufuhr zu der Heizeinrichtung zu geben, falls ein Start der Brennkraftmaschine erwartet wird, oder
einer elektrischen Leistungserzeugungsvorrichtung (20, 410), die dazu eingerichtet ist, elektrische Leistung unter Verwendung der von der Brennkraftmaschine abgegebenen Antriebsleistung zu erzeugen und die Energiespeichervorrichtung aufzuladen, wobei
die Steuerung die Ladevorrichtung steuert, um elektrische Leistung von der Energiespeichervorrichtung zu der Heizeinrichtung zu leiten, falls die elektrische Leistungsempfangseinheit von der Stromversorgung keine elektrische Leistung empfängt.

11. Verfahren zur Steuerung einer elektrischen Leistung eines Hybridfahrzeugs, das sich unter Verwendung einer Antriebsleistung von zumindest einer Brennkraftmaschine (10) und einem Motor (30) zum Fahren des Fahrzeugs bewegt,
wobei das Hybridfahrzeug umfasst:
eine Energiespeichervorrichtung (70) zum Speichern der dem Motor zuzuführenden elektrischen Leistung; und
eine elektrische Leistungsempfangseinheit (110) zum Empfangen von elektrischer Leistung, die von einer Stromversorgung (210) außerhalb des Fahrzeugs zugeführt wird;
**dadurch gekennzeichnet, dass** das Hybridfahrzeug umfasst:
eine Ladevorrichtung (120, 120A), die dazu eingerichtet ist, eine von der elektrischen Leistungsempfangseinheit eingegebene Spannung einer elektrischen Leistung umzuwandeln und die Energiespeichervorrichtung aufzuladen; und
eine Heizeinrichtung (140) zum Empfangen von Betriebsleistung von der Ladevorrichtung und zum Aufwärmen der Brennkraftmaschine, und wobei
das Verfahren zur Steuerung einer elektrischen Leistung die folgenden Schritte umfasst:
Bestimmen, ob die Heizeinrichtung mit der Ladevorrichtung elektrisch verbunden ist oder nicht; und
Steuern der Ladevorrichtung, um einer Leistungszufuhr zu der Heizeinrichtung eine höhere Priorität als einem Aufladen der Energiespeichervorrichtung zu geben, falls bestimmt wird, dass die Heizeinrichtung mit der Ladevorrichtung elektrisch verbunden ist.

12. Verfahren zur Steuerung einer elektrischen Leistung eines Hybridfahrzeugs nach Anspruch 11, ferner mit dem Schritt
Ändern der Ladesteuerung über die Energiespeichervorrichtung in Abhängigkeit davon, ob die Heizeinrichtung mit der Ladevorrichtung elektrisch verbunden ist oder nicht.

13. Verfahren zur Steuerung einer elektrischen Leistung eines Hybridfahrzeugs nach Anspruch 11 oder 12, ferner mit dem Schritt
Bestimmen, ob eine Temperatur der Brennkraftmaschine niedriger als ein vordefinierter Wert ist oder nicht, wobei
in dem Schritt zur Steuerung der Ladevorrichtung, die Ladevorrichtung gesteuert wird, um einer Leistungszufuhr zu der Heizeinrichtung eine höhere Priorität als einem Aufladen der Energiespeichervorrichtung gegeben wird, falls bestimmt wird, dass die Temperatur niedriger als der vordefinierte Wert ist, und bestimmt wird, dass die Heizeinrichtung elektrisch mit dem Ladegerät verbunden ist.

14. Verfahren zur Steuerung einer elektrischen Leistung eines Hybridfahrzeugs nach Anspruch 13, wobei
das Hybridfahrzeug ferner eine elektrisch betriebene Klimaanlage (160) umfasst, die durch die in der Energiespeichervorrichtung gespeicherte elektrische Leistung oder die von der elektrischen Leistungsempfangseinheit zugeführte elektrische Leistung betrieben wird,
die elektrisch betriebene Klimaanlage die Luft in einem Fahrzeuginneren vor einem Einsteigen eines Benutzers in das Fahrzeug auf der Grundlage eines Vorklimatisierungsbefehls zur Anforderung einer Klimatisierung des Fahrzeuginneren vor dem Einsteigen des Benutzers in das Fahrzeug klimatisiert, und
in dem Schritt zur Steuerung der Ladevorrichtung die Ladevorrichtung gesteuert wird, um einer Leistungszufuhr zu der Heizeinrichtung eine höhere Priorität als einem Aufladen der Energiespeichervorrichtung und einem Betrieb der elektrisch betriebenen Klimaanlage zu geben.

15. Verfahren zur Steuerung einer elektrischen Leistung eines Hybridfahrzeugs nach Anspruch 11 oder 12, wobei
das Hybridfahrzeug ferner eine elektrisch beheizte Katalysatorvorrichtung (190) zum Empfangen von elektrischer Leistung von der Energiespeichervorrichtung und zum Reinigen von Abgas umfasst, das von der Brennkraftmaschine abgegeben wird, und
das Verfahren zur Steuerung einer elektrischen Leistung ferner den Schritt einer Ausübung einer elektrischen Leistungssteuerung umfasst, um einer Leistungszufuhr zu der elektrisch beheizten Katalysatorvorrichtung eine höhere Priorität als einer Leistungszufuhr zu der Heizeinrichtung zu geben, falls ein Starten des Verbrennungsmotors erwartet wird.

## Revendications

1. Véhicule hybride qui se déplace en utilisant l'énergie motrice produite par au moins l'un parmi un moteur à combustion interne (10) et un moteur électrique (30) pour le déplacement d'un véhicule comprenant :
un dispositif de stockage d'énergie (70) pour stocker l'énergie électrique devant alimenter ledit moteur électrique ; et
une unité de réception d'énergie électrique (110) pour recevoir l'énergie électrique fournie par une alimentation électrique (210) externe au véhicule ;
**caractérisé en ce qu'**il comprend :
un dispositif de charge (120, 120A) configuré pour convertir une tension de l'énergie électrique à l'entrée provenant de ladite unité de réception d'énergie électrique et charger ledit dispositif de stockage d'énergie ;
un élément chauffant (140) pour recevoir l'énergie de fonctionnement à partir dudit dispositif de charge et réchauffer ledit moteur à combustion interne ; et
un dispositif de commande (165, 165A) pour commander ledit dispositif de charge pour donner une priorité plus élevée à l'alimentation en énergie dudit élément chauffant qu'à la charge dudit dispositif de stockage d'énergie, lorsque ledit élément chauffant est connecté électriquement audit dispositif de charge.

2. Véhicule hybride selon la revendication 1, dans lequel
ledit dispositif de commande modifie la commande de charge dudit dispositif de stockage d'énergie selon que ledit élément chauffant est connecté électriquement ou non audit dispositif de charge.

3. Véhicule hybride selon la revendication 1 ou 2, comprenant en outre
un port d'alimentation électrique (130) prévu dans une salle des machines où est logé ledit moteur à combustion interne, pour recevoir l'énergie électrique à partir dudit dispositif de charge, dans lequel
ledit élément chauffant est configuré pour pouvoir être attaché audit/détaché dudit port d'alimentation électrique.

4. Véhicule hybride selon la revendication 1 ou 2, comprenant en outre
un commutateur (145) pour commuter entre le fonctionnement et le non fonctionnement dudit élément chauffant, dans lequel
ledit dispositif de commande commande ledit dispositif de charge pour donner une priorité plus élevée à l'alimentation en énergie dudit élément chauffant qu'à la charge dudit dispositif de stockage d'énergie, lorsque ledit interrupteur est sur MARCHE.

5. Véhicule hybride selon la revendication 1 ou 2, comprenant en outre
un premier capteur de température (170) pour détecter une température dudit moteur à combustion interne, dans lequel
ledit dispositif de commande commande la charge dudit dispositif de stockage d'énergie et l'alimentation en énergie dudit élément chauffant, sur la base d'une valeur détectée par ledit premier capteur de température et d'un état de charge dudit dispositif de stockage d'énergie.

6. Véhicule hybride selon la revendication 5, dans lequel
ledit dispositif de commande commande ledit dispositif de charge pour donner une priorité plus élevée à l'alimentation en énergie dudit élément chauffant qu'à la charge dudit dispositif de stockage d'énergie, lorsque la valeur détectée par ledit premier capteur de température est inférieure à une première valeur prédéfinie et que ledit élément chauffant est connecté électriquement audit dispositif de charge.

7. Véhicule hybride selon la revendication 6, dans lequel soit
ledit dispositif de commande commande ledit dispositif de charge pour mettre fin à l'alimentation en énergie dudit élément chauffant lorsque la valeur détectée par ledit premier capteur de température atteint ladite première valeur prédéfinie ou la dépasse, et commande ledit dispositif de charge pour charger ledit dispositif de stockage d'énergie lorsqu'une quantité d'un état indiquant l'état de charge dudit dispositif de stockage d'énergie est inférieure à une seconde valeur prédéfinie à la fin de l'alimentation en énergie dudit élément chauffant, soit
ledit dispositif de commande commande ledit dispositif de charge pour charger ledit dispositif de stockage d'énergie, lorsque ledit élément chauffant est déconnecté électriquement dudit dispositif de charge et lorsqu'une quantité d'un état indiquant l'état de charge dudit dispositif de stockage d'énergie est inférieure à une seconde valeur prédéfinie.

8. Véhicule hybride selon la revendication 5, comprenant en outre :
un second capteur de température (180) pour détecter une température d'un habitacle de véhicule ; et
un climatiseur électrique (160) actionné par l'énergie électrique stockée dans ledit dispositif de stockage d'énergie ou par l'énergie électrique à l'entrée provenant de ladite unité de réception d'énergie électrique, dans lequel
ledit climatiseur électrique conditionne l'air dudit habitacle de véhicule avant qu'un utilisateur ne monte à bord du véhicule, sur la base d'une instruction de pré-climatisation pour demander une climatisation dudit habitacle de véhicule avant que l'utilisateur ne monte à bord du véhicule, et
ledit dispositif de commande commande la charge dudit dispositif de stockage d'énergie, l'alimentation en énergie dudit élément chauffant et l'actionnement dudit climatiseur électrique, en outre sur la base d'une valeur détectée par ledit second capteur de température et de ladite instruction de pré-climatisation.

9. Véhicule hybride selon la revendication 8, dans lequel
ledit dispositif de commande commande ledit dispositif de charge pour donner une priorité plus élevée à l'alimentation en énergie dudit élément chauffant qu'à la charge dudit dispositif de stockage d'énergie et qu'à l'actionnement dudit climatiseur électrique, lorsque la valeur détectée par ledit premier capteur de température est inférieure à une valeur prédéfinie et que ledit élément chauffant est connecté électriquement audit dispositif de charge.

10. Véhicule hybride selon la revendication 1 ou 2, comprenant en outre soit
un dispositif catalyseur chauffé électriquement (190) pour recevoir l'énergie électrique à partir dudit dispositif de stockage d'énergie et purifier le gaz d'échappement évacué dudit moteur à combustion interne, dans lequel
ledit dispositif de commande (165A) exerce une commande d'énergie électrique afin de donner une priorité plus élevée à l'alimentation en énergie dudit dispositif catalyseur chauffé électriquement qu'à l'alimentation en énergie dudit élément chauffant, lorsque le démarrage dudit moteur à combustion interne est anticipé, soit
un dispositif de génération d'énergie électrique (20, 410) configuré pour générer l'énergie électrique en utilisant l'énergie motrice produite par ledit moteur à combustion interne et charger ledit dispositif de stockage d'énergie, dans lequel
ledit dispositif de commande commande ledit dispositif de charge pour alimenter en énergie électrique ledit élément chauffant à partir dudit dispositif de stockage d'énergie, lorsque ladite unité de réception d'énergie électrique ne reçoit pas l'énergie électrique à partir de ladite alimentation électrique.

11. Procédé pour commander l'énergie électrique d'un véhicule hybride qui se déplace en utilisant l'énergie motrice produite par au moins l'un parmi un moteur à combustion interne (10) et un moteur électrique (30) pour le déplacement d'un véhicule,
ledit véhicule hybride comportant :
un dispositif de stockage d'énergie (70) pour stocker l'énergie électrique devant alimenter ledit moteur électrique ; et
une unité de réception d'énergie électrique (110) pour recevoir l'énergie électrique fournie par une alimentation électrique (210) externe au véhicule ;
**caractérisé en ce que** le véhicule hybride comporte :
un dispositif de charge (120, 120A) configuré pour convertir une tension de l'énergie électrique à l'entrée provenant de ladite unité de réception d'énergie électrique et charger ledit dispositif de stockage d'énergie ; et
un élément chauffant (140) pour recevoir énergie de fonctionnement à partir dudit dispositif de charge et réchauffer ledit moteur à combustion interne, et
ledit procédé pour commander l'énergie électrique comprenant les étapes consistant à :
déterminer si ledit élément chauffant est connecté électriquement ou non audit dispositif de charge ; et
commander ledit dispositif de charge pour donner une priorité plus élevée à l'alimentation en énergie dudit élément chauffant qu'à la charge dudit dispositif de stockage d'énergie, lorsqu'il est déterminé que ledit élément chauffant est connecté électriquement audit dispositif de charge.

12. Procédé pour commander l'énergie électrique d'un véhicule hybride selon la revendication 11, comprenant en outre l'étape consistant à
modifier la commande de charge dudit dispositif de stockage d'énergie selon que ledit élément chauffant est connecté électriquement ou non audit dispositif de charge.

13. Procédé pour commander l'énergie électrique d'un véhicule hybride selon la revendication 11 ou 12, comprenant en outre l'étape consistant à
déterminer si une température dudit moteur à combustion interne est inférieure ou non à une valeur prédéfinie, dans lequel
à l'étape de commande dudit dispositif de charge, ledit dispositif de charge est commandé pour donner une priorité plus élevée à l'alimentation en énergie dudit élément chauffant qu'à la charge dudit dispositif de stockage d'énergie, lorsqu'il est déterminé que ladite température est inférieure à ladite valeur prédéfinie et lorsqu'il est déterminé que ledit élément chauffant est connecté électriquement audit dispositif de charge.

14. Procédé pour commander l'énergie électrique d'un véhicule hybride selon la revendication 13, dans lequel
ledit véhicule hybride comporte en outre un climatiseur électrique (160) actionné par l'énergie électrique stockée dans ledit dispositif de stockage d'énergie ou par l'énergie électrique à l'entrée provenant de ladite unité de réception d'énergie électrique,
ledit climatiseur électrique conditionne l'air d'un habitacle de véhicule avant qu'un utilisateur ne monte à bord du véhicule, sur la base d'une instruction de pré-climatisation pour demander une climatisation dudit habitacle de véhicule avant que l'utilisateur ne monte à bord du véhicule, et
à l'étape de commande dudit dispositif de charge, ledit dispositif de charge est commandé pour donner une priorité plus élevée à l'alimentation en énergie dudit élément chauffant qu'à la charge dudit dispositif de stockage d'énergie et qu'à l'actionnement dudit climatiseur électrique.

15. Procédé pour commander l'énergie électrique d'un véhicule hybride selon la revendication 11 ou 12, dans lequel
ledit véhicule hybride comporte en outre un dispositif catalyseur chauffé électriquement (190) pour recevoir l'énergie électrique à partir dudit dispositif de stockage d'énergie et purifier le gaz d'échappement évacué dudit moteur à combustion interne, et
ledit procédé pour commander l'énergie électrique comprend en outre l'étape consistant à exercer une commande d'énergie électrique afin de donner une priorité plus élevée à l'alimentation en énergie dudit dispositif catalyseur chauffé électriquement qu'à l'alimentation en énergie dudit élément chauffant, lorsque le démarrage dudit moteur à combustion interne est anticipé.
